# EUROPEAN PATENT SPECIFICATION

(11) **EP 3 331 728 B1**
(45) Date of publication and mention of the grant of the patent: **26.06.2019**
(21) Application number: 16741311.1
(22) Date of filing: 20.07.2016
(51) Int. Cl.: B60R 11/02, B62D 1/10

(54) **SYSTEM FOR MOUNTING A DEVICE TO A FIXED HUB OF A STEERING WHEEL**
SYSTEM ZUR MONTAGE EINER VORRICHTUNG AN EINER FESTSTEHENDEN NABE EINES LENKRADES
SYSTÈME POUR LE MONTAGE D'UN DISPOSITIF SUR UN MOYEU FIXE D'UN VOLANT

(30) Priority: 06.08.2015 IT UB20152925
(43) Date of publication of application: 13.06.2018
(73) Proprietor: CNH Industrial Italia S.P.A., 10135 Turin (IT)
(72) Inventor: CADALORA, Alessio, 41121 Modena (IT); GABRIELE, Armando, 87065 Corigliano Calabro (IT); MOLESINI, Simone, 41012 Carpi (IT); SALVINI, Tiziano, 20067 Tribiano (IT)
(74) Representative: CNH Industrial IP Department
(86) International application number: PCT/EP2016/067289
(87) International publication number: WO 2017/021148

(56) References cited:
- DE-A1- 3 534 362
- JP-U- S6 410 445
- JP-U- S56 134 853
- US-A- 4 578 592
- US-A1- 2011 024 470

## Description

### BACKGROUND OF THE INVENTION

The present invention relates to vehicles, and, more specifically to steering wheel assemblies for vehicles.

Driven vehicles, such as agricultural vehicles or cars, are typically directed by a user through the use of a steering wheel connected to a steering mechanism of the vehicle. By rotating the steering wheel, the user is able to effectively control the relative orientation of the vehicle's traction members, such as wheels, to direct the vehicle in a desired direction.

During operation, many users prefer to keep at least one hand on the steering wheel so that they maintain control of the vehicle. As such, the steering wheel is a focal point for the user during operation. To offer convenience to the user, vehicle manufacturers have integrated various controls into the steering wheel that allow the user to control various aspects of the vehicle, such as the volume of the stereo, cruise control features, etc. Integrating these controls into the steering wheel offers easy access to the controls in a location that the user's hands normally would be during operation.

Typically, the controls that are integrated into the steering wheel will rotate with the steering wheel, so that the controls will change their orientation as the steering wheel rotates. It is known from EP 2662263 A1 to produce a steering wheel having a central part that is uncoupled from a rim of the steering wheel, allowing the central part to remain stationary as the rim is rotated to control the steering mechanism. It is also taught to include control devices on the central to monitor and control various operations of the vehicle. This configuration allows the controls to maintain one orientation during operation of the steering wheel, which can make it easier for the user to activate a desired control during a turn.

It is also known from the generic DE 3534362 to produce a steering wheel having a removable central part in which a phone is therein incorporated.

Since known vehicles integrate the controls into the steering wheel, the controls cannot be easily changed or replaced and require an extensive disassembly of the steering wheel assembly to do so. This is inconvenient for the user, especially when the steering wheel is for a multi-purpose vehicle such as an agricultural tractor where the user's desired controls on the steering wheel can frequently change depending on what agricultural implement the tractor is carrying. Further, the difficulty in changing the controls integrated into the steering wheel encourages integrating as many control functions on the steering wheel as possible, which clutters the steering wheel with sometimes unnecessary controls. Even further, known steering wheels limit the types of devices and controls that can be integrated into the steering wheel.

What is needed in the art is a steering wheel assembly that allows for different controls and devices to be easily installed.

### SUMMARY OF THE INVENTION

The present invention provides for a steering wheel assembly that includes a fixed hub and a housing that is removably locked to the fixed hub by a locking mechanism that can be actuated to allow the housing to be unlocked from the fixed hub.

The invention in one form is directed to a steering wheel assembly that includes a fixed hub and a steering wheel held rotatably about the fixed hub. The steering wheel assembly is characterized by a housing removably locked to the fixed hub, the housing and/or the fixed hub having at least one locking feature; and a locking mechanism that interacts with the at least one locking feature to lock the housing to the fixed hub, with actuation of the locking mechanism in an unlock direction allowing the housing to be unlocked from the fixed hub, said assembly is also characterized by comprising a holder carried by said housing that is sized to hold a phone or a tablet (24), or a controller (22).

An advantage of the present invention is that it provides for easy replacement of the housing onto the fixed hub.

Another advantage is that the housing can be designed to hold various devices and controls to be integrated with the steering wheel.

### BRIEF DESCRIPTION OF THE DRAWINGS

The above-mentioned and other features and advantages of this invention, and the manner of attaining them, will become more apparent and the invention will be better understood by reference to the following description of embodiments of the invention taken in conjunction with the accompanying drawings, wherein:
Fig. 1 is a perspective view of an embodiment of a steering wheel assembly according to the present invention;
Fig. 2A is an exploded view of a housing of the steering wheel assembly shown in Fig. 1;
Fig. 2B is another exploded view of the housing shown in Figs. 1 and 2A;
Fig. 3 is a perspective view of a mounting portion of the housing shown in Figs. 1-2B;
Fig. 4 is a perspective view of the steering wheel assembly shown in Fig. 1 with the housing removed;
Fig. 5A is a cross-sectional view of the mounting portion shown in Fig. 3 locked to the fixed hub shown in Figs. 1 and 4;
Fig. 5B is a cross-sectional view of the mounting portion shown in Fig. 5A being unlocked from the fixed hub;
Figs. 6A-6C are perspective views of an embodiment of a housing being locked to the fixed hub shown in Fig. 4;
Fig. 7A is an exploded view of another embodiment of a housing according to the present invention;
Fig. 7B is another exploded view of the housing shown in Fig. 7A;
Fig. 8 is a perspective view of another embodiment of a housing locked to the fixed hub;
Fig. 9 is a perspective view of another embodiment of a fixed hub according to the present invention;
Fig. 10A is a perspective view of yet another embodiment of a housing locked to the fixed hub shown in Fig. 9; and
Fig. 10B is a perspective view of the housing shown in Fig. 10A rotated 90 degrees relative to the fixed hub.

Corresponding reference characters indicate corresponding parts throughout the several views. The exemplifications set out herein illustrate embodiments of the invention, and such exemplifications are not to be construed as limiting the scope of the invention in any manner.

### DETAILED DESCRIPTION OF THE INVENTION

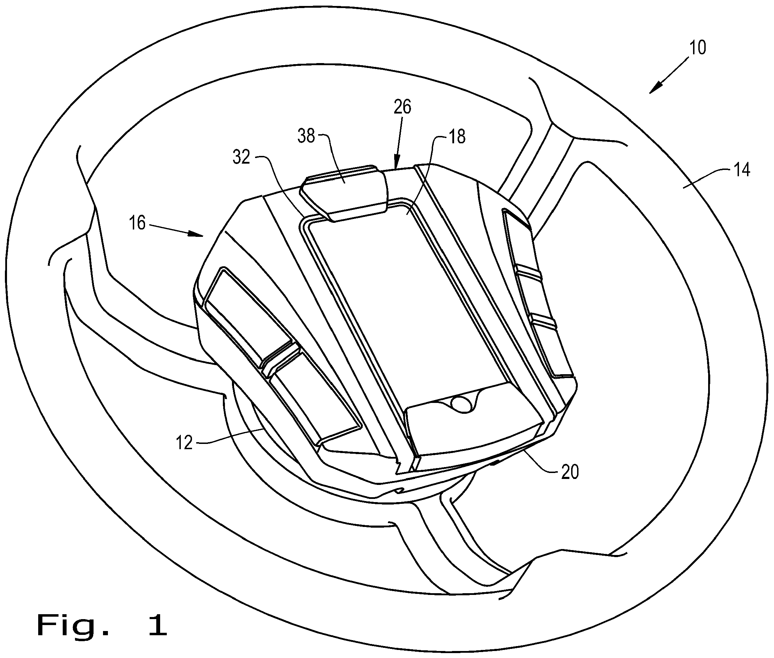

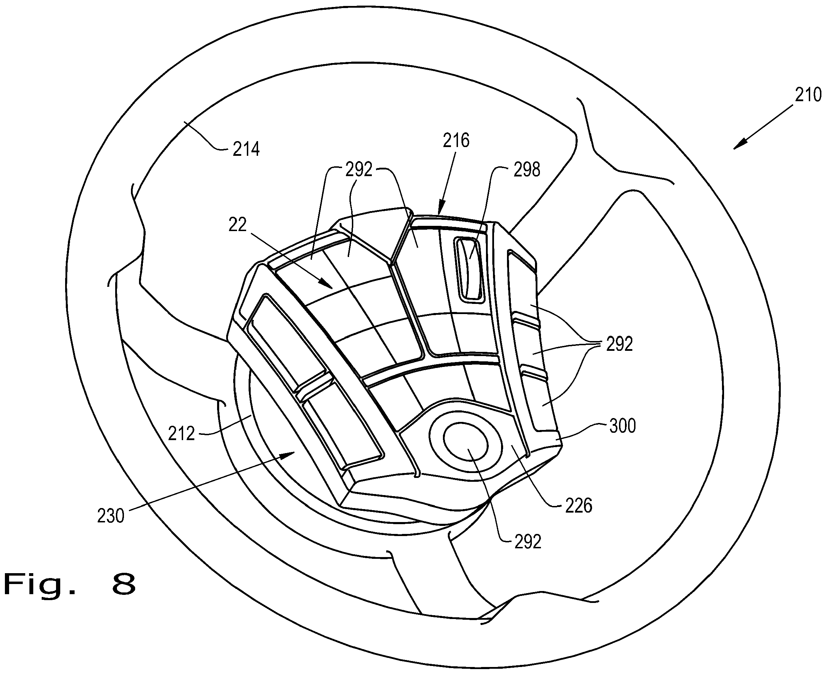

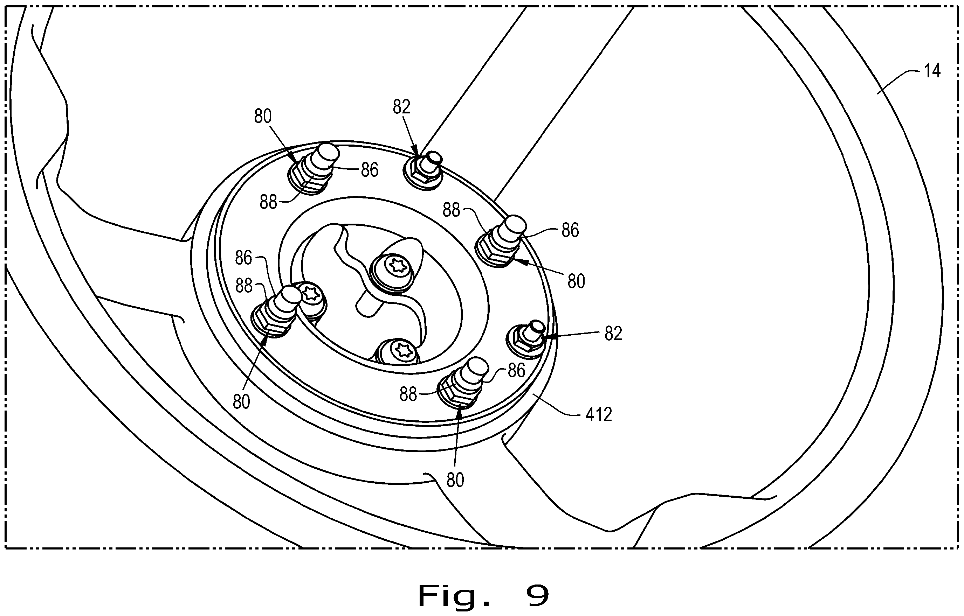

Referring now to the drawings, and more particularly to Fig. 1, an embodiment of a steering wheel assembly 10 that generally includes a fixed hub 12, a steering wheel 14 that is rotatably held about the fixed hub 12, and a housing 16 that is removably locked to the fixed hub 12, the manner of which will be described further herein. The steering wheel assembly 10 can be placed in a cabin of a motorized vehicle and connected to the vehicle's steering mechanism so that rotation of the steering wheel 14 will control the steering mechanism and allow a user to direct the vehicle in a desired direction. The steering wheel 14 can rotate relative to the fixed hub 12, which does not rotate, as taught by EP 2662263 A1, for example, so a description of this feature is omitted. As can be seen, the housing 16 can hold, for example, a smartphone 18 or other device in a holder 20 that is carried by the housing 16. Although the holder 20 is shown in Fig. 1 as being designed to hold a smartphone 18, the holder 20 can be sized and shaped to hold other devices such as a controller 22 (shown in Fig. 8) and/or a tablet 24 (shown in Figs. 9A and 9B).

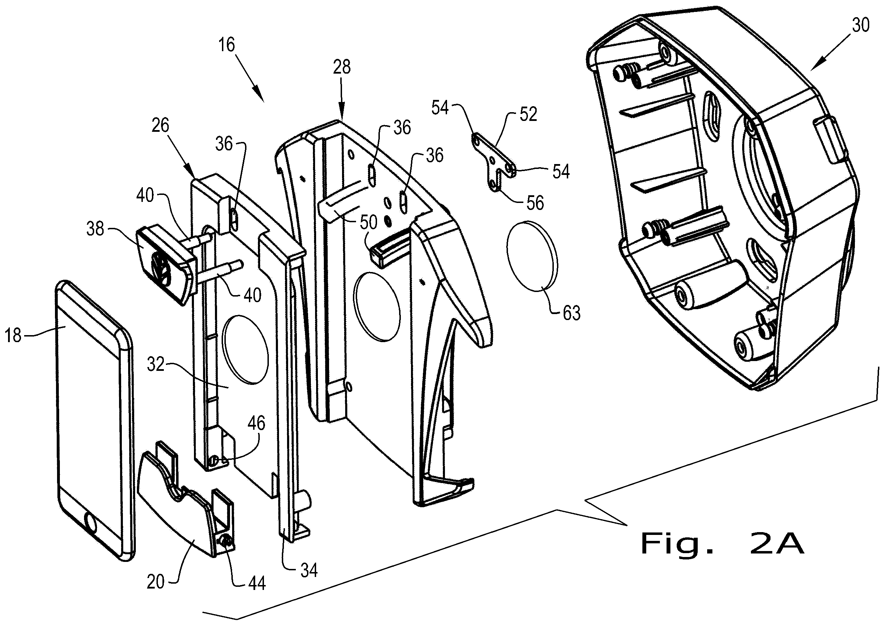

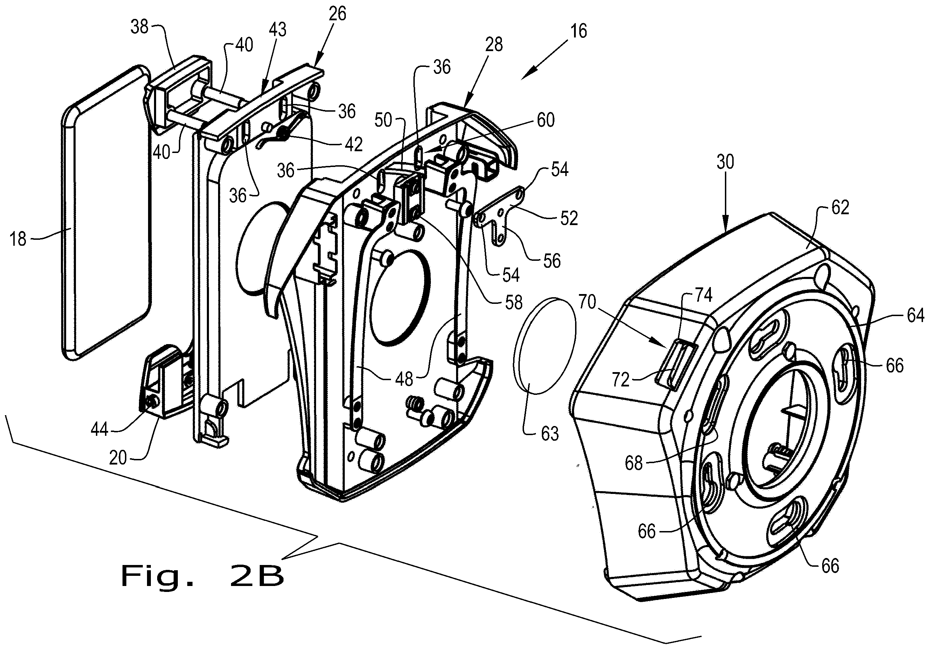

Referring now to Figs. 2A and 2B, the housing 16 is shown detached from the fixed hub 12 in an exploded view. As shown, the housing 16 can include a device portion 26 that helps hold a device such as smartphone 18 in the holder 20, an ejecting portion 28 connected to the device portion 26 that includes various components to help eject the smartphone 18 from the holder 20 when desired, and a mounting portion 30 connected to both the device portion 26 and ejecting portion 28 to mount the other portions 26 and 28 to the fixed hub 12. As can be seen, the device portion 26 can have a recessed portion 32 formed therein where the device 18 will be held. The recessed portion 32 can be shaped to hold a specific model of device, such as an APPLE® iPhone 6®, or shaped to hold several different models. The recessed portion 32 can be formed with a depth so the device 18 is held flush with a front 34 of the device portion 26 and will not extend out past the front 34 where the device 18 could be more vulnerable to damage. The device portion 26 has a pair of slider openings 36 formed through and a slider 38 has a pair of prongs 40 that extend through the slider openings 36 so that the slider 38 can be held to the device portion 26. The slider openings 36 are elongated openings that allow for movement of the slider 38 within the slider openings 36 in an upward or downward direction. A slider spring 42 connected to a back of the device portion 26 biases the slider 38 in the downward direction toward the holder 20 so the slider 38 will press the device 18 into the holder 20 when no opposing force is applied to the slider 38, helping to secure the device 18 in the holder 20. It should be appreciated that the relative placement of the slider openings 36, slider 38, slider spring 42, and holder 20 could be reversed so that the slider 38 would be biased in the upward direction toward the holder 20 to help secure the device 18 in the holder 20. Together, the slider 38 biased toward the holder 20 by slider spring 42 form a clamping mechanism 43 that helps secure the device 18 in the holder 20. The holder 20 can be pivotally connected to the device portion 26 by placing one or more pivot protrusions 44 formed in the holder 20 within one or more corresponding pivot openings 46 formed in the device portion 26, allowing the holder 20 to rotate about the pivot opening(s) 46 toward and away from the device portion 26 to accept the device 18 within the holder 20.

The ejecting portion 28 is connected to the device portion 26 by various screws that are omitted for ease of illustration. The ejecting portion 28 also has slider openings 36 formed through that allow the prongs 40 of the slider 38 to extend through. A pair of ejector springs 48 are connected to the back of the ejecting portion 28 and are biased toward the device portion 26 so that absent an opposing force, ejector prongs 50 of the ejector springs 48 push out the device 18 held in the device portion 26. To prevent the ejector springs 48 from always pushing out the device 18, a slider plate 52 is associated with the slider 38 by pushing the slider prongs 40 through openings 54 formed in the slider plate 52 and placing a tracking portion 56 of the slider plate 52 in a guide rail 58 connected to the back of the ejecting portion 28. The tracking portion 56 of the slider plate 52 glides along the guide rail 58 to help control upward and downward movement of the slider 38 and the width of the slider plate 52 allows a portion of the slider plate 52 to push on the ejector springs 48 when the slider 38 is pushed downward a sufficient distance, either by the slider spring 42 or otherwise. The slider spring 42 can provide a sufficient downward force, by itself, on the slider 38 and associated slider plate 52 to provide the force necessary to force the ejector springs 48 away from the device portion 26 so as not to eject the device 18. This action allows downward movement of the slider 38 and associated slider plate 52 to not only secure the device 18 in the holder 20, but force the ejector springs 48 sufficiently away from the device portion 26 to not push the device 18 out. Once the slider 38 and associated slider plate 52 are pushed away from the holder 20 a sufficient distance, the slider plate 52 no longer forces the ejector springs 48 away from the device portion 26 sufficiently to prevent the ejector springs 48 from pushing the device 18 out. Together, the slider plate 52, ejector springs 48 and ejector prongs 50 form an ejecting mechanism 60 that pushes the device 18 away from the housing 16 when the slider 38 is moved away from the holder 20. Optionally, a wireless charger 63 can be included with the housing 16 and be connected to the vehicle's electrical system so the wireless charger 63 can charge and/or power the held device 18. The wireless charger 63, shown as a disc shaped module in Figs. 2A and 2B, can extend through openings formed in the device portion 26 and ejecting portion 28 so that the wireless charger 63 is held flush with or slightly protrude from a front of the recessed portion 32 to make contact with a charging port or area (not shown) on the back of the held device 18. The wireless charger 63 can utilize any desired wireless charging configuration, such as the Qi or Power Matters Alliance (PMA) wireless charging standards. It should be appreciated that while a wireless charger 63 is shown, any type of charger can be incorporated with the housing 16 to provide power to the held device 18 as it is being held. If desired, an indicator light (not shown) linked to the wireless charger 63 can be included on the housing 16 that shines when a held device 18 is being charged by the wireless charger 63, allowing a user to see that the held device 18 is charging and correct contact issues between the held device 18 and wireless charger 63 if the held device 18 is not charging.

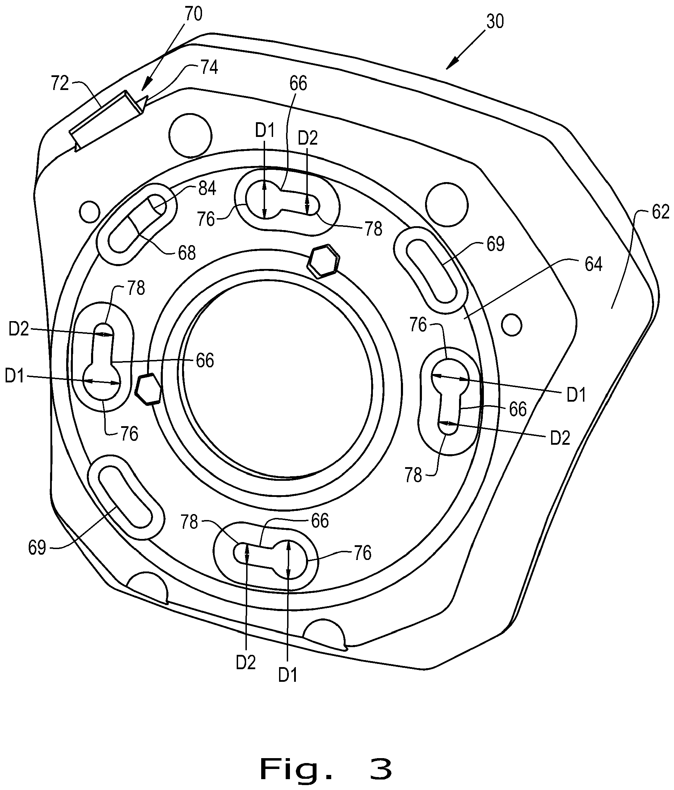

The mounting portion 30 of the housing 16 is connected to both the device portion 26 and ejecting portion 28 and allows the housing 16 to be locked to the fixed hub 12. The mounting portion 30 can include a main portion 62 that connects to the device portion 26 and ejecting portion 28. The main portion 62 can also hold any electronic components that are included with the housing 16. A mounting plate 64 is connected to the main portion 62 and has axial lock openings 66 formed therein as well as a housing lock opening 68 formed therein, which are shown in better detail in Fig. 3. A locking mechanism 70 can be connected to the mounting plate 64 such that a spring lever 72 extends out of a lever opening 74 formed in the main portion 62.

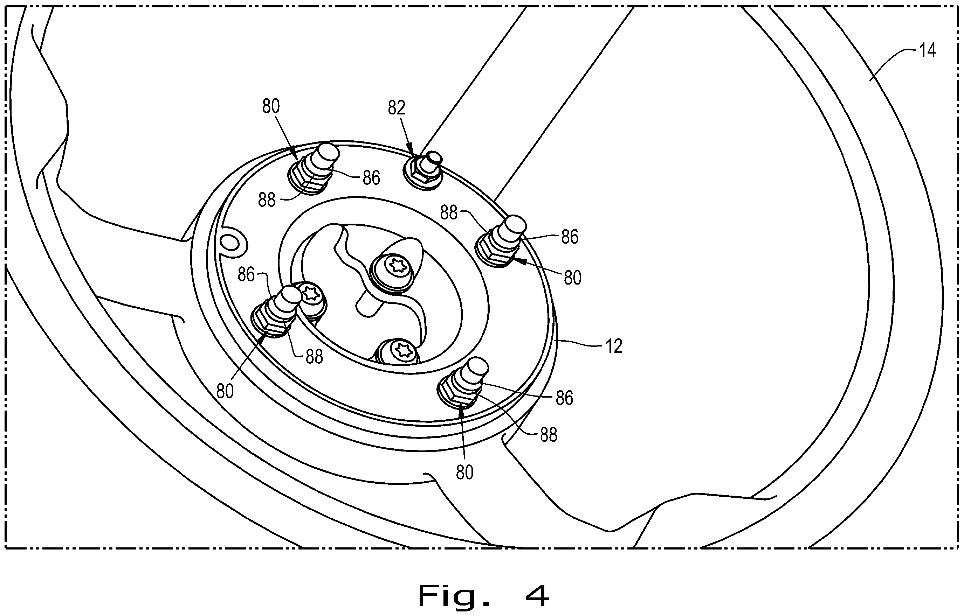

Referring now to Figs. 3 and 4, and specifically to Fig. 3, it can be seen that the axial lock openings 66, which can also be referred to as first housing locking features, are elongated slots that have a circular entryway 76 with a diameter D1 and an elongated slide slot 78 with a diameter D2 that is reduced compared to the diameter D1 of the entryway 76. The axial lock openings 66 are formed in the mounting plate 64 to correspond to hub axial lock pins 80, which can also be referred to as first hub locking features and are shown in Fig. 4, the significance of which will be described further herein. The housing lock opening 68, which can also be referred to a second housing locking feature, is also formed as an elongated slot, albeit one with a constant diameter across a length of the slot 68. The housing lock opening 68 is formed to correspond to a hub locking pin 82, which can also be referred to as a second hub locking feature and is shown in Fig. 4. The spring lever 72 is held above the housing lock opening 68, i.e. closer to the device portion 26, so that a lever opening 84 formed in the spring lever 72 partially overlaps with the housing lock opening 68, as shown in Fig. 3. The spring lever 72 is biased toward the mounting plate 64 and away from the device portion 26 so that the spring lever 72 is forced into proximity with the housing lock opening 68 unless a force actuates the spring lever 72 away from the mounting plate 64. The mounting plate 64 can also have one or more sliding features 69, shown as sliding slots, formed therein that are shaped to slide over the hub locking pin 82 shown in Fig. 4. The sliding features 69 can be formed in the mounting plate 64 so that they are offset 90 degrees relative to the housing lock opening 68, the significance of which will be described further herein.

Referring specifically now to Fig. 4, the hub axial lock pins 80 and hub locking pin 82 are shown in better detail connected to the fixed hub 12. The hub axial lock pins 80 can be formed to have an enlarged diameter portion 86 and a reduced diameter portion 88 formed as a groove into the enlarged diameter portion 86. The enlarged diameter portions 86 of the hub axial lock pins 80 have a diameter that is roughly equivalent to the diameter D1 of the entryways 76 so that the hub axial lock pins 80 can slide through the entryways 76 and the reduced diameter portions 88 of the hub axial lock pins 80 have a diameter that is roughly equivalent to the diameter D2 of the slide slots 78.

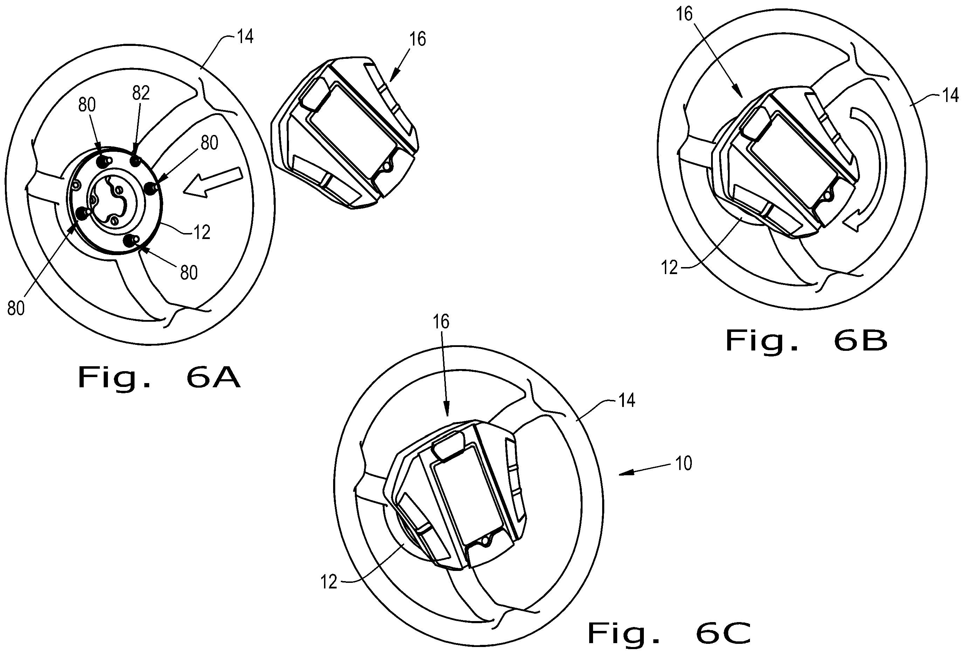

Referring now to Figs. 6A to 6C, an illustration of mounting the housing 16 to the fixed hub 12 is shown. First, the entryways 76 of the axial lock openings 66 are aligned with the enlarged diameter portions 86 of the hub axial lock pins 80 and the housing lock opening 68 is aligned with the hub locking pin 82. The housing 16 is then pushed toward the fixed hub 12 so that the enlarged diameter portions 86 clear the mounting plate 64 and the hub locking pin 82 rests within the housing lock opening 68. The spring lever 72 is then actuated away from the fixed hub 12 so that the spring lever 72 no longer interferes with relative rotation between the housing lock opening 68 and hub locking pin 82 and the housing 16 can be rotated relative to the fixed hub 12. After the housing 16 is fully rotated, the spring lever 72 can be released so that the hub locking pin 82 rests within both the housing lock opening 68 and lever opening 84 and the reduced diameter portions 88 of the hub axial lock pins 80 rest within the slide slots 78 of the axial lock openings 66. At this point, the spring lever 72 prevents relative rotation of the housing lock opening 68 and hub locking pin 82, and therefore relative rotation between the housing 16 and fixed hub 12, and the enlarged diameter portions 86 of the hub axial lock pins 80 prevent the housing 16 from being pulled away from the fixed hub 12. The housing 16 is therefore locked to the fixed hub 12.

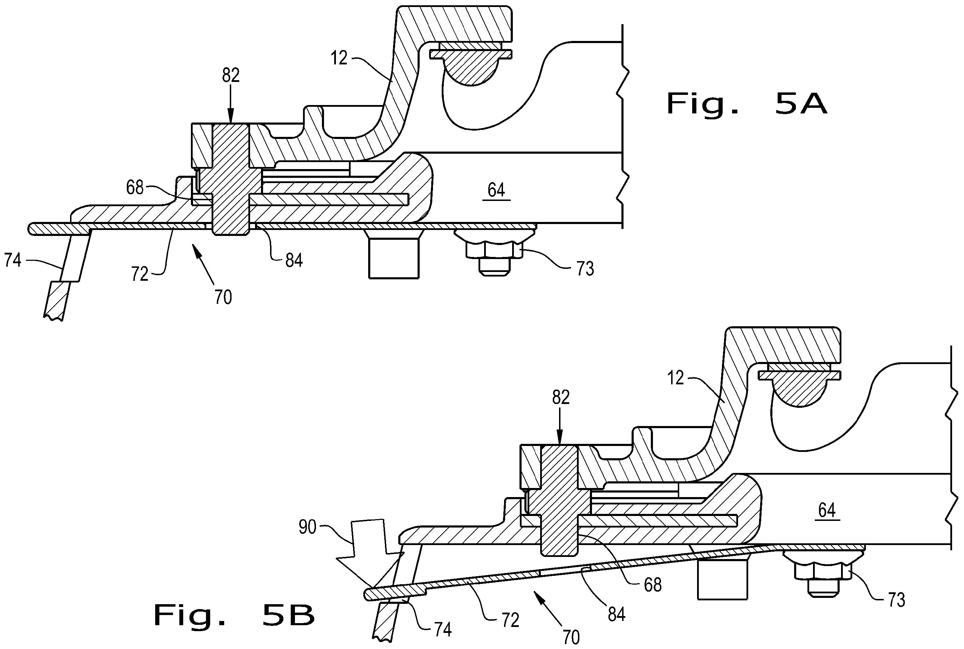

Referring now to Figs. 5A and 5B, the housing 16 is shown locked to the fixed hub 12 in Fig. 5A. As can be seen, the hub locking pin 82 rests within the housing lock opening 68 and lever opening 84 to prevent relative rotation between the housing 16 and the fixed hub 12 and locking the housing 16 to the fixed hub 12. The lever spring 72 is shown as being carried by the housing 16 by a screw 73 connecting the lever spring 72 to the mounting plate 64, but could be carried by the housing 16 in other ways. To unlock the housing 16 from the fixed hub 12, the lever spring 72 is actuated in an unlock direction, signified as arrow 90, away from the fixed hub 12, as shown in Fig. 5B. By actuating the lever spring 72 in the unlock direction 90 and holding it, the housing 16 can once again be rotated relative to the fixed hub 12 so the entryways 76 of the axial lock openings 66 align with the enlarged diameter portions 86 of the hub axial lock pins 80. The housing 16 can then be pulled away from the fixed hub 12 to remove the housing 16 from the fixed hub 12. While the housing locking features 66 and 68 are shown as openings and the hub locking features 80 and 82 are shown as pins, the housing 16 can include pins as its locking features and the hub 12 can include openings as its locking features. Similarly, while the locking mechanism 70 is shown as being carried by the housing 16, the locking mechanism 70 can also be connected to or otherwise held adjacent to the fixed hub 12 to interact with a locking feature of the fixed hub 12 and/or housing 16 to removably lock the housing 16 to the fixed hub 12.

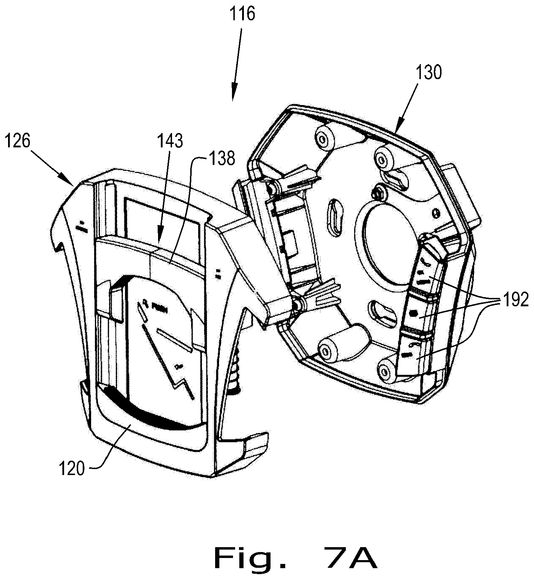

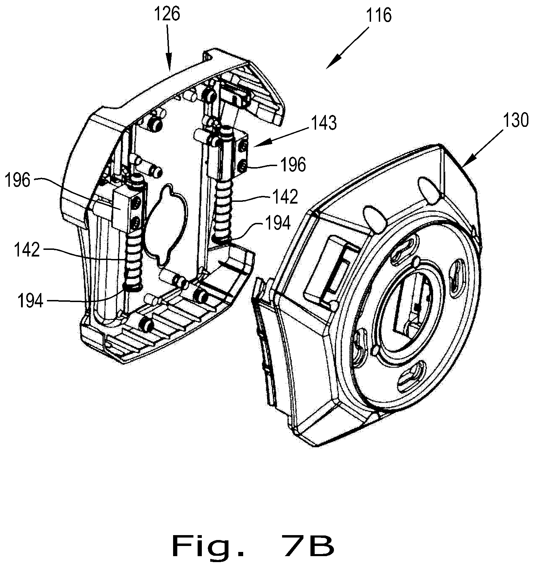

Referring now to Figs. 7A and 7B, another embodiment of a housing 116 is shown. As housing 116 is similar to housing 16 shown in Figs. 1-6C, similar components are numbered with reference numerals raised by 100. The housing 116 includes a device portion 126 with an attached holder 120 and a mounting portion 130 connected to the device portion 126. As can be seen, the mounting portion 130 is similar to the mounting portion 30 previously shown, with the addition of function buttons 192 that are connected to the main portion 162 and can connect to electronic components (not shown) held in the housing 116 to produce control signals that perform various functions, such as answer a phone call on a Bluetooth® connected phone. The device portion 126 carries a clamping mechanism 143 that includes a slider 138, which can be split in halves as shown, held on a front of the device portion 126 and is biased toward the holder 120 by a pair of slider springs 142 mounted on slider pegs 194. The slider 138 includes a pair of slider prongs (not seen) connected to slider guides 196 that firmly grip the slider pegs 194 and are biased toward the holder 120 by the slider springs 142. In this sense, the slider guides 196 transmit forces between the slider 138 and slider springs 142 while also maintaining the slider 138 in axis so the slider 138 only travels up and down to permit a precision movement of the slider 138. The slider springs 142 are configured to pull the slider 138 down toward the holder 120 to a relaxed position of the slider springs 142, which is shown in Figs. 7A and 7B. To clamp a device in the device portion 126 using the clamp mechanism 143, the device is abutted against the slider 138 and pushed up, so that the slider 138 forces the associated slider guide 196 up the slider pegs 194 to cause a displacement of the slider springs 142. Once the slider 138 has been lifted a sufficient distance for the device to sit in the holder 120, the device is placed in the holder 120 and the slider springs 142 bias the slider 138 into the top of the device to secure the device in the holder 120. To remove the device, the slider 138 can be manually pushed up and the device can then be removed. It should be appreciated that the clamping mechanism 143 can be altered so that the relative locations of the holder 120 and slider 138 and general biasing direction of the slider springs 142 are reversed and still clamp the device.

It should therefore be appreciated that the mounting portions 30 and 130 can connect to a variety of device portions 26 and 126 to allow for integration of a wide variety of devices and control functions on a steering wheel assembly 10. Referring now to Fig. 8, a steering wheel assembly 210 is shown that includes a fixed hub 212, a steering wheel 214 rotatably held about the fixed hub 212, and a housing 216 removably locked to the fixed hub 212 similarly to previously described housings 16 and 116. The housing 216 includes a mounting portion 230 that is locked to the fixed hub 212 and a device portion 226 connected to the mounting portion 230. As can be seen, the device portion 226 holds a controller 22 that includes a variety of function buttons 292 and a function knob 298 to produce various control signals when activated. As can be seen, the function buttons 292 and knob 298, when activated, can cause, for example, the vehicle's engine to start or stop, activate the vehicle's hazard lights, activate the parking brake, answer a phone call on a Bluetooth® connected phone, etc. The function buttons 292 or knob 298 can also control the engine hand throttle, engine speed memory, gear selector, four wheel drive activation, differential lock, front suspension, and power take-off. If desired, the function buttons 292 and knob 298 can also control various comfort settings such as the volume of the vehicle's sound system, the temperature from the vehicle's climate control system. The housing 216 can include some of the function buttons 292 or knob(s) 298 on a bezel 300 that is separate from the device portion 226 and connected to the mounting portion 230. If such a configuration is chosen, the bezel 300 can include functions buttons 292 or knob(s) 298 that control universal functions of the vehicle including the steering wheel assembly 210, such as a tractor, while the device portion 226 includes function buttons 292 or knob(s) 298 that control carried implement specific functions. This allows for the housing 216 to incorporate a universal bezel 300 that will control universal functions while also allowing for changeable device portions 226 that can control specific functions based on the specific configuration of the vehicle. The housing 216 can also include a temperature sensor, a solar sensor, and/or a microphone for telephone conversations, if desired.

In some instances, it is desirable to have two positions that a mounted housing can assume relative to the fixed hub. Such a situation can be when a user wishes to rotate a device between the portrait and landscape orientations before locking the device to the fixed hub. To allow the locked device to be rotated between the portrait and landscape orientations and referring now to Fig. 9, a fixed hub 412 can be provided that is similar to the fixed hub 12 shown in Fig. 4, but has an additional hub locking pin 82 located 90 degrees clockwise relative to the single hub locking pin 82 shown in Fig. 4. Other than the additional hub locking pin 82, the fixed hub 412 shown in Fig. 9 is similar in all respects to the fixed hub 12 shown in Fig. 4.

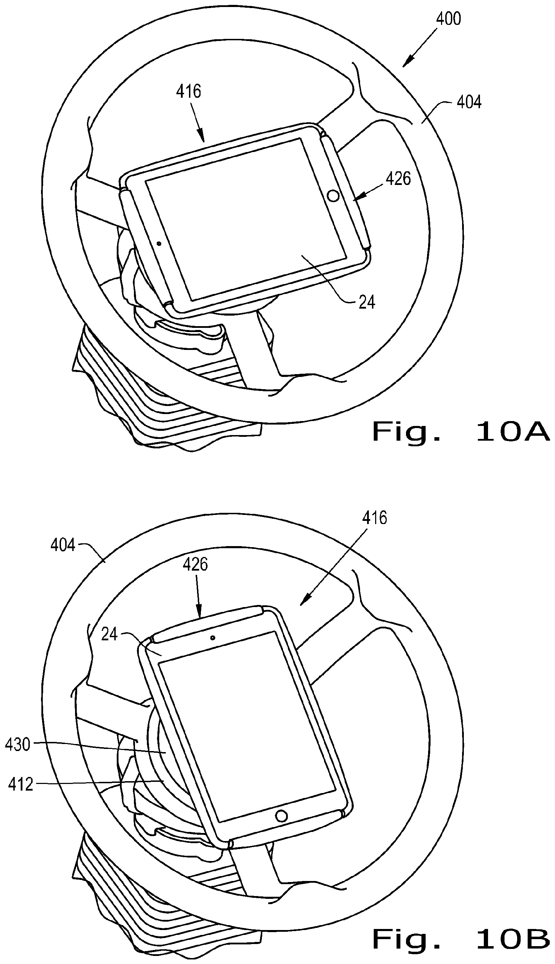

Referring now to Figs. 10Aand10B, yet another embodiment of a steering wheel assembly 400 is shown that includes the fixed hub 412 shown in Fig. 9, a steering wheel 404 rotatably held about the fixed hub 412, and a housing 416 removably locked to the fixed hub 412 similarly to previously described housings 16, 116 and 216. As can be seen, the housing 416 includes a mounting portion 430 locked to the fixed hub 412 and a device portion 426 connected to the mounting portion 430 that is holding a tablet device 24. The mounting portion 430 can be configured similarly to the mounting portion 30 shown in Figs. 2-3. Since it may be desired to rotate the tablet 24 between the landscape orientation, shown in Fig. 10A, and the portrait orientation, shown in Fig. 10B, relative to the fixed hub 412, having two hub locking pins 82 on the fixed hub 412, as shown in Fig. 9, allows the housing 416 to be locked to the fixed hub 412 by having the locking mechanism 70 interact with either of the hub locking pins 82 as previously described. While the locking mechanism 70 interacts with one of the hub locking pins 82, the other locking pin 82 still protrudes from the fixed hub 412. To prevent the unused hub locking pin 82 from interfering with the housing 416 being locked to the fixed hub 412, the sliding feature 69 of the mounting portion 430 can be placed over the unused hub locking pin 82 so that the unused hub locking pin 82 does not prevent the housing 416 from locking to the fixed hub 412. The housing 416 can then be locked to the fixed hub 412 by the locking mechanism 70 interacting with either hub locking pin 82, which are offset by 90 degrees relative to one another, with the hub locking pin 82 that the locking mechanism 70 interacts with determining whether the housing 416 is locked to the fixed hub 412 in the portrait or landscape orientation.

While not shown, a shuttle paddle can also be included in the steering wheel assembly 400 by, for example, connecting to the fixed hub 412 and being held inside the steering wheel 404 above the spokes. The shuttle paddle can be linked to the vehicle's transmission so that activation of the shuttle paddle in different directions can cause different effects on the vehicle's locomotion. For example, the shuttle paddle can be pulled toward the user to select the vehicle's reverse direction, or pushed away from the user to select the vehicle's forward direction. The shuttle paddle can be placed on either side of the steering wheel and shaped to be easily reached by a user's hands. A push button can be placed on the fixed hub 412 close to the paddle that puts the vehicle's transmission in neutral when pushed. A parking switch can also be placed on the fixed hub 412 close to the shuttle paddle to activate and deactivate the vehicle's parking brake. The parking switch can, for example, be pulled to activate the parking brake and pushed to deactivate the parking brake. It is further contemplated that the vehicle's main display can show the status of the various functions that are controlled.

Further, having a steering wheel assembly with a fixed hub can allow other miscellaneous features to be incorporated in vehicles, such as tractors, that normally do not have such features. For example, an air bag system can be integrated with the fixed hub of the present invention to deploy when a collision occurs. The air bag system can be positioned in the middle of the steering wheel so that the air bag components are held in the fixed hub, and will deploy outwardly from the fixed hub in the event of a serious collision. Many air bag systems are known from, for example, the automobile industry that can be readily integrated into the fixed hub to provide this feature in tractors or other vehicles where such features have not been integrated.

## Claims

1. A steering wheel assembly (10, 210, 410), comprising:
a fixed hub (12, 212, 412);
a steering wheel (14, 214, 414) held rotatably about said fixed hub (12, 212, 412);
a housing (16, 116, 216, 416) removably locked to said fixed hub (12, 212, 412), said housing (16, 116, 216, 416) and/or said fixed hub (12, 212, 412) having at least one locking feature (66, 68, 80, 82),
a locking mechanism (70) interacting with said at least one locking feature (66, 68, 80, 82) to lock said housing (16, 116, 216, 416) to said fixed hub (12, 212, 412), wherein actuation of said locking mechanism (70) in an unlock direction (90) allows said housing (16, 116, 216, 416) to be unlocked from said fixed hub (12, 212, 412),
**characterized by** further comprising
a holder (20, 120) carried by said housing (16, 116, 216, 416) that is sized to hold a phone (18), or a tablet (24), and/or a controller (22)

2. The steering wheel assembly (10, 210, 410) of claim 1, further comprising a clamping mechanism (43, 143) carried by said housing (16, 116, 216, 416) including at least one biasing element (42, 142) carried by said housing (16, 116, 216, 416) and at least one slider (38, 138) biased toward a held device (18) and/or said holder (20, 120) by said at least one biasing element (42, 142).

3. The steering wheel assembly (10, 210, 410) of claims 1 to 2, wherein said clamping mechanism (43, 143) includes a guide (58, 196) to maintain said at least one slider (38, 138) in axis and permit a precision movement.

4. The steering wheel assembly (10, 210, 410) of claims 1 to 3, wherein said holder (20, 120) is rotatable relative to said housing (16, 116, 216, 416).

5. The steering wheel assembly (10, 210, 410) of claims 1 to 3, further comprising an ejecting mechanism (60) that pushes a held device (18) away from said housing (16, 116, 216, 416) when said at least one slider (38, 138) is moved away from said holder (20, 120) and/or the held device (18).

6. The steering wheel assembly (10, 210, 410) of claims 2 to 5, wherein said housing includes a wireless charger (63) that can charge the held device (18).

7. The steering wheel assembly (10, 210, 410) of any one of the preceding claims, wherein said housing (16, 116, 216, 416) includes a bezel (300).

8. The steering wheel assembly (10, 210, 410) of any one of the preceding claims, wherein said housing (16, 116, 216, 416) includes at least one function button (192, 292) and/or knob (298), preferably on said bezel (300), that produces a control signal when activated.

9. The steering wheel assembly (10, 210, 410) of any of the preceding claims, wherein said fixed hub (12, 212, 412) and said housing (16, 116, 216, 416) each include at least one locking feature (66, 68, 80, 82) and said locking mechanism (70) is carried by said housing (16, 116, 216, 416).

10. The steering wheel assembly (10, 210, 410) of claim 9, wherein said locking mechanism (70) includes a spring lever (72) connected to said housing (16, 116, 216, 416) and biased opposingly to said unlock direction (90).

11. The steering wheel assembly (10, 210, 410) of any one of the preceding claims, wherein said fixed hub (12, 212, 412) includes at least one first hub locking feature (80) and at least one second hub locking feature (82) and said housing (16, 116, 216, 416) includes at least one first housing locking feature (66) and at least one second housing locking feature (68), said at least one first hub locking feature (80) shaped to interact with said at least one first housing locking feature (66) and said at least one second hub locking feature (82) shaped to interact with said at least one second housing locking feature (68).

12. The steering wheel assembly (10, 210, 410) of claim 11, wherein said locking mechanism (70) locks a second housing locking feature (68) to a second hub locking feature (82) by limiting rotation of the locked second housing locking feature (68) relative to the second hub locking feature (82).

13. The steering wheel assembly (10, 210, 410) of claim 12, wherein actuation of said locking mechanism (70) in the unlock direction (90) permits free rotation of the second housing locking feature (68) relative to the second hub locking feature (82).

14. The steering wheel assembly (10, 210, 410) of claims 11 to 13, wherein said fixed hub (12, 212, 412) includes at least two second hub locking features (82) and said housing (16, 116, 216, 416) includes at least one sliding feature (69), said at least one sliding feature (69) sliding over at least one second hub locking feature (82) to prevent the second hub locking feature (82) from interfering with said housing (16, 116, 216, 416) locking to said fixed hub (12, 212, 412).

## Patentansprüche

1. Lenkradanordnung (10, 210, 410) mit:
einer feststehenden Nabe (12, 212, 412);
einem Lenkrad (14, 214, 414), das um die feststehende Nabe (12, 212, 412) drehbar gelagert ist;
einem Gehäuse (16, 116, 216, 416), das lösbar mit der feststehenden Nabe (12, 212, 412) verriegelt ist, wobei das Gehäuse (16, 116, 216, 416) und/oder die feststehende Nabe (12, 212, 412) zumindest eine Verriegelungseinrichtung (66, 68, 80, 82) aufweisen,
einem Verriegelungsmechanismus (70), der mit der zumindest einen Verriegelungseinrichtung (66, 68, 80, 82) zusammen wirkt, um das Gehäuse (16, 116, 216, 416) mit der feststehenden Nabe (12, 212, 412) zu verriegeln, wobei eine Betätigung des Verriegelungsmechanismus (70) in eine Entriegelungsrichtung (90) es dem Gehäuse (16, 116, 216, 416) ermöglicht, von der feststehenden Nabe (12, 212, 412) entriegelt zu werden,
**dadurch gekennzeichnet, dass** sie weiterhin umfasst
eine Halteeinrichtung (20, 120), die vom Gehäuse (16, 116, 216, 416) getragen wird und die dimensioniert ist, um ein Telefon (18) oder ein Tablet (24) und/oder eine Steuereinrichtung (22) zu halten.

2. Lenkradanordnung (10, 210, 410) nach Anspruch 1, weiterhin mit einem Klemmmechanismus (43, 143), der vom Gehäuse (16, 116, 216, 416) getragen wird und der zumindest ein Vorspannelement (42, 142), das vom Gehäuse (16, 116, 216, 416) getragen wird, und zumindest einen Schieber (38, 138) umfasst, der durch das zumindest eine Vorspannelement (42, 142) in Richtung einer gehaltenen Vorrichtung (18) und/oder der Halteeinrichtung (20, 120) vorgespannt ist.

3. Lenkradanordnung (10, 210, 410) nach den Ansprüchen 1 bis 2, wobei der Klemmmechanismus (43, 143) eine Führung (58, 196) umfasst, um den zumindest einen Schieber (38, 138) in der Achse zu halten und eine präzise Bewegung zu ermöglichen.

4. Lenkradanordnung (10, 210, 410) nach den Ansprüchen 1 bis 3, wobei die Halteeinrichtung (20, 120) relativ zum Gehäuse (16, 116, 216, 416) drehbar ist.

5. Lenkradanordnung (10, 210, 410) nach den Ansprüchen 1 bis 3, weiterhin mit einem Auswurfmechanismus (60), der eine gehaltene Vorrichtung (18) vom Gehäuse (16, 116, 216, 416) wegdrückt, wenn der zumindest eine Schieber (38, 138) von der Halteeinrichtung (20, 120) und/oder der gehaltenen Vorrichtung (18) weg bewegt wird.

6. Lenkradanordnung (10, 210, 410) nach den Ansprüchen 2 bis 5, wobei das Gehäuse ein kabelloses Ladegerät (63) umfasst, das die gehaltene Vorrichtung (18) aufladen kann.

7. Lenkradanordnung (10, 210, 410) nach einem der vorangehenden Ansprüche, wobei das Gehäuse (16, 116, 216, 416) eine Einfassung (300) umfasst.

8. Lenkradanordnung (10, 210, 410) nach einem der vorangehenden Ansprüche, wobei das Gehäuse (16, 116, 216, 416) zumindest eine Funktionstaste (192, 292) und/oder einen Drehknopf (298) vorzugsweise an der Einfassung (300) umfasst, die bzw. der ein Steuersignal erzeugt, wenn sie bzw. er betätigt wird.

9. Lenkradanordnung (10, 210, 410) nach einem der vorangehenden Ansprüche, wobei die feststehende Nabe (12, 212, 412) und das Gehäuse (16, 116, 216, 416) jeweils zumindest eine Verriegelungseinrichtung (66, 68, 80, 82) umfassen und der Verriegelungsmechanismus (70) vom Gehäuse (16, 116, 216, 416) getragen wird.

10. Lenkradanordnung (10, 210, 410) nach Anspruch 9, wobei der Verriegelungsmechanismus (70) einen Federhebel (72) umfasst, der mit dem Gehäuse (16, 116, 216, 416) verbunden ist und entgegengesetzt der Entriegelungsrichtung (90) vorgespannt ist.

11. Lenkradanordnung (10, 210, 410) nach einem der vorangehenden Ansprüche, wobei die feststehende Nabe (12, 212, 412) zumindest eine erste Nabenverriegelungseinrichtung (80) und zumindest eine zweite Nabenverriegelungseinrichtung (82) umfasst und das Gehäuse (16, 116, 216, 416) zumindest eine erste Gehäuseverriegelungseinrichtung (66) und zumindest eine zweite Gehäuseverriegelungseinrichtung (68) umfasst, wobei die zumindest eine erste Nabenverriegelungseinrichtung (80) derart geformt ist, dass sie mit der zumindest einen ersten Gehäuseverriegelungseinrichtung (66) zusammenwirkt, und die zumindest eine zweite Nabenverriegelungseinrichtung (82) derart geformt ist, dass sie mit der zumindest einen zweiten Gehäuseverriegelungseinrichtung (68) zusammenwirkt.

12. Lenkradanordnung (10, 210, 410) nach Anspruch 11, wobei der Verriegelungsmechanismus (70) eine zweite Gehäuseverriegelungseinrichtung (68) mit einer zweiten Nabenverriegelungseinrichtung (82) durch Begrenzen der Drehung der verriegelten zweiten Gehäuseverriegelungseinrichtung (68) relativ zur zweiten Nabenverriegelungseinrichtung (82) miteinander verriegelt.

13. Lenkradanordnung (10, 210, 410) nach Anspruch 12, wobei das Betätigen des Verriegelungsmechanismus (70) in der Entriegelungsrichtung (90) das freie Drehen der zweiten Gehäuseverriegelungseinrichtung (68) relativ zur zweiten Nabenverriegelungseinrichtung (82) ermöglicht.

14. Lenkradanordnung (10, 210, 410) nach den Ansprüchen 11 bis 13, wobei die feststehende Nabe (12, 212, 412) zumindest zwei zweite Nabenverriegelungseinrichtungen (82) umfasst und das Gehäuse (16, 116, 216, 416) zumindest eine Schiebeeinrichtung (69) umfasst, wobei die zumindest eine Schiebeeinrichtung (69) derart über zumindest eine zweite Nabenverriegelungseinrichtung (82) gleitet, dass die zweite Nabenverriegelungseinrichtung (82) daran gehindert ist, das Gehäuse (16, 116, 216, 416) zu beeinträchtigen, das mit der feststehenden Nabe (12, 212, 412) verriegelt.

## Revendications

1. Ensemble de volant (10, 210, 410) comprenant :
un moyeu fixe (12, 212, 412) ;
un volant (14, 214, 414) maintenu de manière à pouvoir tourner autour dudit moyeu fixe (12, 212, 412) ;
un boîtier (16, 116, 216, 416) verrouillé de manière amovible sur ledit moyeu fixe (12, 212, 412), ledit boîtier (16, 116, 216, 416) et/ou ledit moyeu fixe (12, 212, 412) possédant au moins un dispositif de verrouillage (66, 68, 80, 82) ;
un mécanisme de verrouillage (70) interagissant avec ladite au moins un dispositif de verrouillage (66, 68, 80, 82) pour verrouiller ledit boîtier (16, 116, 216, 416) sur ledit moyeu fixe (12, 212, 412), l'actionnement dudit mécanisme de verrouillage (70) dans une direction de déverrouillage (90) permettant de déverrouiller ledit boîtier (16, 116, 216, 416) dudit moyeu fixe (12, 212, 412),
**caractérisé en ce qu'**il comprend en outre :
un support (20, 120), supporté par ledit boîtier (16, 116, 216, 416), qui est dimensionné pour retenir un téléphone (18) ou une tablette (24), et/ou un dispositif de commande (22).

2. Ensemble de volant (10, 210, 410) selon la revendication 1, comprenant en outre un mécanisme de serrage (43, 143) supporté par ledit boîtier (16, 116, 216, 416), comprenant au moins un élément de sollicitation (42, 142) supporté par ledit boîtier (16, 116, 216, 416) et au moins un élément coulissant (38, 138) sollicité vers un dispositif retenu (18) et/ou ledit support (20, 120) par ledit au moins un élément de sollicitation (42, 142).

3. Ensemble de volant (10, 210, 410) selon la revendication 1 à 2, dans lequel ledit mécanisme de serrage (43, 143) comprend un guide (58, 196) pour maintenir ledit au moins un élément coulissant (38, 138) dans l'axe et pour permettre un mouvement de précision.

4. Ensemble de volant (10, 210, 410) selon les revendications 1 à 3, dans lequel ledit support (20, 120) est rotatif par rapport audit boîtier (16, 116, 216, 416).

5. Ensemble de volant (10, 210, 410) selon les revendications 1 à 3, comprenant en outre un mécanisme d'éjection (60) qui repousse un dispositif retenu (18) à partir dudit boîtier (16, 116, 216, 416) lorsque ledit au moins un élément coulissant (38, 138) est déplacé à partir dudit support (20, 120) et/ou du dispositif retenu (18).

6. Ensemble de volant (10, 210, 410) selon les revendications 2 à 5, dans lequel ledit boîtier comprend un chargeur sans fil (63) qui peut charger le dispositif retenu (18).

7. Ensemble de volant (10, 210, 410) selon l'une quelconque des revendications précédentes, dans lequel ledit boîtier (16, 116, 216, 416) comprend un encadrement (300).

8. Ensemble de volant (10, 210, 410) selon l'une quelconque des revendications précédentes, dans lequel ledit boîtier (16, 116, 216, 416) comprend au moins un bouton de fonction (192, 292) et/ou bouton de commande (298), de préférence sur ledit encadrement (300), qui produit un signal de commande lorsqu'il est activé.

9. Ensemble de volant (10, 210, 410) selon l'une quelconque des revendications précédentes, dans lequel ledit moyeu fixe (12, 212, 412) et ledit boîtier (16, 116, 216, 416) comprennent chacun au moins un dispositif de verrouillage (66, 68, 80, 82) et ledit mécanisme de verrouillage (70) étant supporté par ledit boîtier (16, 116, 216, 416).

10. Ensemble de volant (10, 210, 410) selon la revendication 9, dans lequel ledit mécanisme de verrouillage (70) comprend un levier à ressort (72) relié audit boîtier (16, 116, 216, 416) et sollicité à l'opposé de ladite direction de déverrouillage (90).

11. Ensemble de volant (10, 210, 410) selon l'une quelconque des revendications précédentes, dans lequel ledit moyeu fixe (12, 212, 412) comprend au moins un premier dispositif de verrouillage de moyeu (80) et au moins un second dispositif de verrouillage de moyeu (82) et ledit boîtier (16, 116, 216, 416) comprend au moins un premier dispositif de verrouillage de boîtier (66) et au moins un second dispositif de verrouillage de boîtier (68), ladite au moins un premier dispositif de verrouillage de moyeu (80) étant façonné pour interagir avec ledit au moins un premier dispositif de verrouillage de boîtier (66) et ledit au moins un second dispositif de verrouillage de moyeu (82) étant façonné pour interagir avec ladite au moins un second dispositif de verrouillage de boîtier (68).

12. Ensemble de volant (10, 210, 410) selon la revendication 11, dans lequel ledit mécanisme de verrouillage (70) verrouille un second dispositif de verrouillage de boîtier (68) sur un second dispositif de blocage de moyeu (82) par la limitation de la rotation du second dispositif de verrouillage de boîtier (68) verrouillé par rapport au second dispositif de verrouillage de moyeu (82).

13. Ensemble de volant (10, 210, 410) selon la revendication 12, dans lequel l'actionnement dudit mécanisme de verrouillage (70) dans la direction de déverrouillage (90) permet une rotation libre du second dispositif de verrouillage de boîtier (68) par rapport au second dispositif de verrouillage de moyeu (82).

14. Ensemble de volant (10, 210, 410) selon les revendications 11 à 13, dans lequel ledit moyeu fixe (12, 212, 412) comprend au moins deux seconds dispositifs de verrouillage de moyeu (82) et ledit boîtier (16, 116, 216, 416) comprend au moins un dispositif de coulissement (69), ladite au moins un dispositif de coulissement (69) coulissant sur au moins un second dispositif de verrouillage de moyeu (82) pour empêcher l'interférence du second dispositif de verrouillage de moyeu (82) avec ledit boîtier (16, 116, 216, 416) verrouillé sur ledit moyeu fixe (12, 212, 412).
